Europäisches Patentamt

European Patent Office

Office européen des brevets

(19)

(11) Veröffentlichungsnummer: **0 027 267**

**A1**

(12)
# EUROPÄISCHE PATENTANMELDUNG

(21) Anmeldenummer: 80106182.1

(22) Anmeldetag: 10.10.80

(51) Int. Cl.³: **F 16 B 13/06**

(30) Priorität: 12.10.79 DE 2941520

(43) Veröffentlichungstag der Anmeldung:
22.04.81 Patentblatt 81/16

(84) Benannte Vertragsstaaten:
AT FR GB IT

(71) Anmelder: Deutsche Salice GmbH

D-7141 Freiberg/Heutingheim(DE)

(72) Erfinder: Salice, Luciano
Via del Ronco
I-22060 Carimate(IT)

(74) Vertreter: Lorenz, Eduard Rechtsanwälte Eduard
Lorenz- Bernhard Seidler- et al,
Margrit Seidler-Dipl.-Ing. Hans Karl Gossel- Dr. Ina
Philipps-Dipl.-Chem. Rainer Wulf Widenmayerstrasse 23
D-8000 München 22(DE)

(54) Spreizbarer Dübel.

(57) Bei einem spreizbaren Dübel zur Befestigung von Platten, Möbelscharnieren oder dergleichen mit einem mit einem durchgehenden Loch (5) versehenen Schaft (1,2), der von seinem zur Einführung die die Dübelbohrung bestimmten Ende her mindestens über einen Teil seiner Länge mit mindestens zwei einander gegenüberliegenden Längsschlitzen (12) versehen ist, weist das Loch mindestens einen Bereich auf (6), der sich in Richtung auf dieses Ende hin verbreitert. In das Loch (5) ist ein mit einem Innengewinde versehenes Spreizteil einschiebbar, in das zum Einziehen des Spreizteils in den Bereich der sich verengenden Bohrung eine mit einem Kopf versehene Schraube einschraubbar ist. Zum Zwecke der Vereinfachung und Verbilligung des Dübels besteht das Spreizteil aus einer üblichen mehrkantigen Schraubenmutter.

Fig. 2    Fig. 3 (A-B)

0027267

75 415  G-die
18. 9. 1979

Deutsche Salice GmbH,
7141 Freiberg/Heutingheim

_____


Spreizbarer Dübel.


_____



Die Erfindung betrifft einen spreizbaren Dübel zur Befestigung von Platten, Möbelscharnieren oder dergleichen
mit einem mit einem durchgehenden Loch versehenen Schaft,
der von seinem zur Einführung in die Dübelbohrung bestimmten Ende her mindestens über einen Teil seiner Länge mit
mindestens zwei einander gegenüberliegenden Längsschlitzen
versehen ist, wobei das Loch mindestens einen Bereich
aufweist, der sich in Richtung auf dieses Ende hin verbreitert, mit einem in das Loch einschiebbaren und mit
einem Innengewinde versehenen Spreizteil, in das zum
Einziehen des Spreizteils in den Bereich der sich verengenden Bohrung eine mit einem Kopf versehene Schraube
einschraubbar ist.

Aus den DE-OS 15 59 892, 22 29 657 und 24 57 172 sowie der DE-AS 15 59 890 sind spreizbare Dübel bekannt, bei denen die Spreizteile aus etwa kegelstumpfförmigen Muttern bestehen, die durch Schrauben in den mit Längsschlitzen versehenen Schaft des Dübels einziehbar sind. Die bekannten Dübel sind insofern aufwendig, als deren aus konusförmigen Muttern bestehende Spreizteile eine besondere Herstellung bedingen.

Aufgabe der vorliegenden Erfindung ist es daher, einen Dübel zu schaffen, der ein einfacheres und billigeres Spreizteil aufweist.

Erfindungsgemäß wird diese Aufgabe bei einem Dübel der eingangs angegebenen Art dadurch gelöst, daß das Spreizteil aus einer üblichen mehrkantigen Schraubmutter besteht. Bei dem erfindungsgemäßen Dübel kann als Spreizteil eine übliche Normmutter verwendet werden, so daß dessen Herstellung durch den Wegfall besonders geformter Schleppmuttern verbilligt ist. Durch die Verwendung von Normmuttern als Spreizteile wird auch die Lagerhaltung vereinfacht.

Zweckmäßigerweise weist der Schaft des Dübels zwischen seinem Einführungsende und dem sich verjüngenden Bereich der Bohrung einen Führungsabschnitt für die Schraubenmutter auf, dessen Querschnittsprofil der Umfangsform der Schraubenmutter derart angepaßt ist, daß diese in diesem axial verschieblich, aber gegen Drehung gesichert, geführt ist. Da die erfindungsgemäß als Spreizteile verwendeten Schraubenmuttern üblicherweise einen sechseckigen Querschnitt aufweisen, brauchen die Spreizteile nicht mit besonderen Verdrehsicherungen versehen zu werden. Der Führungsabschnitt der Bohrung des Dübelschaftes ist der Querschnittsform der SChraubenmutter in der Weise angepaßt, daß diese in diesem axial verschieblich, aber unverdrehbar, geführt ist. Da der Führungsabschnitt über seine Länge eine gleichbleibende Querschnittsform aufweist, kann die Schraubenmutter zur Vormontage in diesen Führungsabschnitt durch Drehung der Dübelschraube eingezogen werden, ohne daß der Dübelschaft gespreizt wird, was bei der Montage beim Eindrücken in die Dübelbohrungen zu Schwierigkeiten führen würde.

Beim Einziehen des Spreizteils in die Bohrung des Dübelschafts kann es nun vorkommen, daß das Spreizteil so weit eingezogen wird, daß der Dübelschaft bereits gespreizt wird, so daß dessen Eindrücken in die Dübelbohrung bei der Montage wesentlich erschwert oder sogar unmöglich ist. Um ein Spreizen des Dübelschafts bei der Vormontage durch Einschrauben des Spreizteils zu vermeiden, ist es aus der DE-OS 24 57 172 bekannt, die konusförmige Schleppmutter im Bereich der großen Konusfläche mit einem Anschlagrand zu versehen, wobei bei der Vormontage die Schleppmutter nur bis zur Abstützung des Anschlagrandes auf dem Außen- rand des Dübels eingeschraubt wird. Der Widerstand, den der Außenrand des Dübels dem Anschlagrand der konusförmigen Schleppmutter entgegensetzt, wird erst beim Anziehen der Spannschraube bei der späteren Montage überwunden.

Um ein Spreizen des Dübelschafts bei der Vormontage des erfindungsgemäßen Dübels zu verhindern, ist nach einer erfinderischen Weiterbildung vorgesehen, daß der sich verjüngende Bereich der Bohrung des Dübelschafts über einen deren Querschnitt verengenden Absatz an den Führungsabschnitt anschließt. Dieser Absatz bildet eine etwa radiale Anschlagfläche für die durch Drehen der Spannschraube eingezogene Schraubenmutter, so daß die Schraubenmutter nicht übergangslos in den sich verjüngenden Bereich der Bohrung eingezogen und den Dübelschaft spreizen kann. Werden zur Vormontage der erfindungsgemäßen Dübel Drehmomentenschraubenzieher verwendet, werden diese so eingestellt, daß die Spannschrauben nicht weiter gedreht werden, sobald sich bei Auflauf der Schraubenmuttern auf die radialen Anschlagflächen ein erhöhter Drehwiderstand ergibt. Bei der Vormontage mit einfachen Schraubenziehern kann dieser erhöhte Widerstand leicht gefühlt werden. Werden die Dübel bei der Endmontage in vorgebohrte Löcher eingesetzt, läßt sich durch Drehen der Spannschrauben der durch die Anschlagflächen hervorgerufene Widerstand leicht überwinden und die Schraubenmuttern werden zur Spreizung der Dübelschäfte in die sich verjüngenden Bereiche der Bohrungen eingezogen.

Bei den bekannten Dübeln sind die Dübelschäfte einstückig mit den Montageplatten für die Scharnierarme oder dergleichen verbunden. Dies ist jedoch in den Fällen nachteilig, in denen die Befestigung der Montageplatten beispielsweise durch einfache Holzschrauben einfacher und zweckmäßiger ist. Nach einer weiteren erfinderischen Weiterentwicklung der Erfindung ist daher vorgesehen, daß zwei Dübelschäfte durch eine Verbindungsleiste an ihren oberen Rändern miteinander verbunden sind. Diese mit Dübeln versehene Leiste läßt sich sodann unter den Befestigungsflansch einer Montageplatte, eines topfförmigen Scharnierteils oder dergleichen, legen, wobei sodann die die Montageplatte oder dergleichen befestigende Schraube die die Schraubenmutter in den Dübelschaft einziehende Spannschraube ist. Soll die Montageplatte oder dergleichen ohne Dübel montiert werden, können statt der Spannschrauben übliche Holzschrauben verwendet werden.

Zur Befestigung von Montageplatten, Scharniertöpfen oder dergleichen können auch einzelne mit einem oberen Flansch versehene Dübel verwendet werden, wobei die Flansche auf mindestens einer Seite in radialer Richtung verlängert sind, um eine Verdrehsicherung zu schaffen.

Die Dübelschäfte können auf ihrer Außenseite in bekannter Weise ein widerhakenförmiges Profil aufweisen. Sie lassen sich weiterhin in einfacher Weise als Spritzgußteile aus Kunststoff herstellen.

Ausführungsbeispiele der Erfindung werden nachstehend anhand der Zeichnung näher erläutert. In dieser zeigt

Fig. 1    eine Seitenansicht zweier durch einen Steg miteinander verbundener Dübel,

Fig. 2    eine Unteransicht der Dübel nach Fig. 1,

Fig. 3    einen Schnitt durch die Dübel längs der Linie A - B in Fig. 2,

Fig. 4    einen Schnitt durch einen Dübel längs der Linie C - D in Fig. 1,

Fig. 5    eine Seitenansicht eines Dübels mit einem eine Verdrehsicherung bildenden Flansch,

Fig. 6    eine Unteransicht des Dübels nach Fig. 5 und

Fig. 7 einen Schnitt durch den Dübel nach
den Fig. 5 und 6.

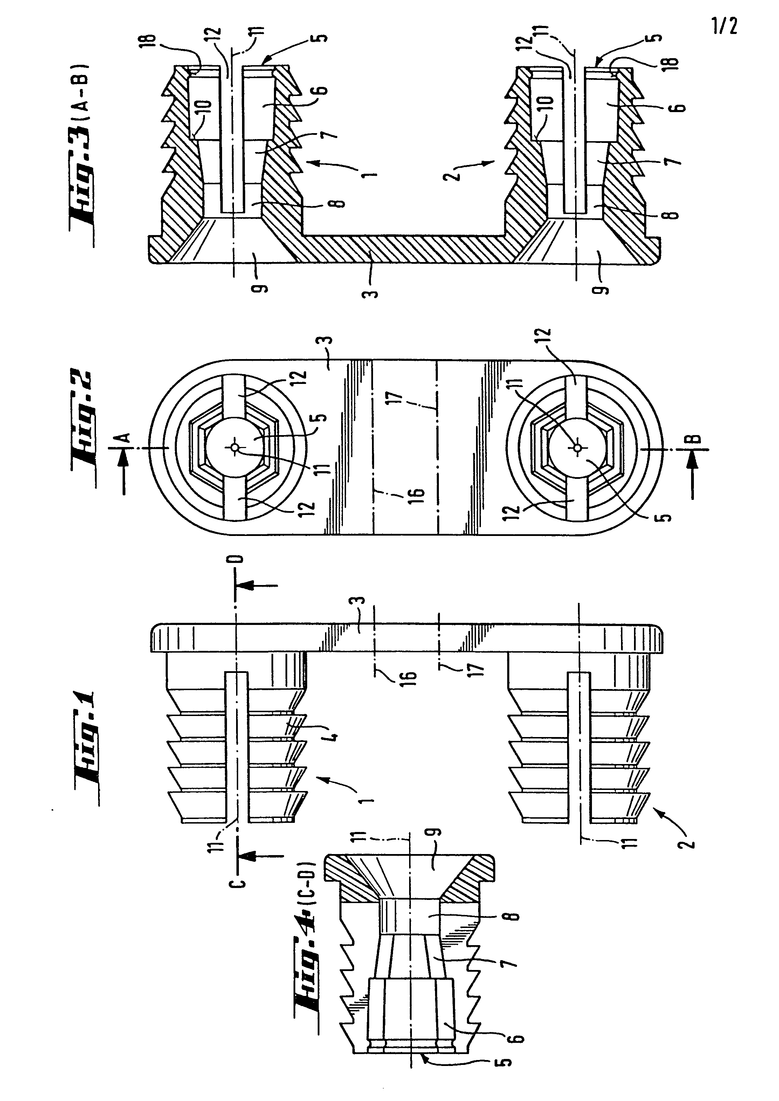

Bei der Ausführungsform nach den Fig. 1 bis 4 sind zwei
Dübelschäfte 1, 2 im Bereich ihrer oberen Ränder einstückig
mit einer Leiste 3 verbunden. Die Dübelschäfte 1, 2 weisen
auf ihren Außenseiten ein sägezahnförmiges Profil auf, das
durch aufeinanderfolgende kegelstumpfförmige Ringe 4 gebildet ist. Die Schäfte 1, 2 sind mit Bohrungen 5 versehen,
die aus Abschnitten mit unterschiedlicher Querschnittsform
bestehen. Vom zum Einführen in die Dübelbohrung bestimmten
Ende her gesehen, besteht der erste Abschnitt aus einem
Führungsabschnitt 6, der einen sechseckigen Querschnitt
aufweist, der der Umfangsform der als Spreizteile dienenden und nicht dargestellten Schraubenmutter in der Weise
angepaßt ist, daß diese in dem Führungsabschnitt axial verschieblich, aber unverdrehbar, geführt ist. Über den eine
Stufe bildenden Absatz 10 schließt an den Abschnitt 6 ein
sich verjüngender Abschnitt 7 an, dessen Querschnittsform
der Querschnittsform des Führungsabschnitts 6 ähnlich ist.
Die Innenwandung des Abschnitts 7 ist durch trapezförmige
Flächen gebildet, die spitzwinkelig zur Mittellinie 11
der Schäfte 1, 2 verlaufen. An den sich im Querschnitt verjüngenden Abschnitt 7 schließt ein Abschnitt 8 mit zylindrischer Bohrung an. Der an diesen angrenzende äußere Abschnitt
9 der Bohrung ist kegelstumpfförmig erweitert.

Die Schäfte 1, 2 sind mit einander gegenüberliegenden
Schlitzen 12 versehen, die vom Einführungsende her über den
sich verjüngenden Abschnitt 7 hinaus bis in den zylinderförmigen Abschnitt 8 hinein verlaufen. Die Schlitze 12
liegen in einer die Mittellinie 11 der Schäfte 1, 2 durchsetzenden Ebene.

Die die Schäfte 1, 2 verbindende Leiste 3 bildet gleichzeitig einen flanschförmigen oberen Rand, der der Halterung der Dübel dient.

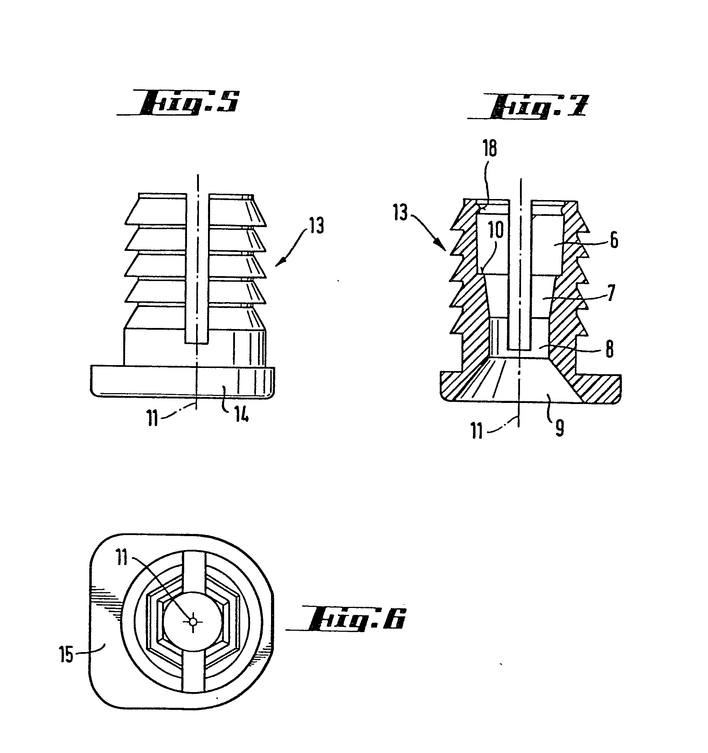

Der Schaft 13 des in den Fig. 5 bis 7 dargestellten Dübels entspricht in seinem Aufbau den Schäften 1, 2 des vorstehend beschriebenen Dübels, so daß dieser nicht nochmals beschrieben wird. Der Dübel nach den Fig. 5 bis 7 unterscheidet sich von dem vorstehend beschriebenen Dübel lediglich dadurch, daß dessen oberer Rand aus einem flanschförmigen Teil 14, und nicht aus einem zwei Dübelschäfte verbindenden Steg, gebildet ist. Das flanschförmige Teil 14 ist auf einer Seite durch eine Fahne 15 fortgesetzt, die als Verdrehsicherung dient.

Der in den Fig. 5 bis 7 dargestellte Dübel kann als selbständiges Spritzgußteil hergestellt werden. Es kann aber auch aus dem Dübel nach den Fig. 1 bis 4 dadurch erhalten werden, daß der Steg 3 längs den Linien 16, 17 durchtrennt wird.

Im äußeren Randbereich des Führungsabschnitts 6 kann ein über dessen innere Wandung umlaufender ringförmiger Wulst 18 vorgesehen sein. Dieser Wulst bildet einen die in den Führungsabschnitt 6 eingeschobene Schraubenmutter haltenden Ansatz, der verhindert, daß die Schraubenmutter aus dem Führungsabschnitt herausfällt, bevor in diese von dem gegenüberliegenden Ende der Dübelbohrung her die Spannschraube eingeschraubt worden ist. Der umlaufende Wulst kann durch einen Unterschnitt in der Gießform beim Spritzgießen hergestellt werden.

Die Dübelbohrung 5 ist an ihrem zur Einführung der Schraube
bestimmten Ende 9 kegelstumpfförmig erweitert, um den mit
Hilfe des Dübels zu befestigenden Beschlag zu zentrieren,
wenn dieser mittels Senkkopfschrauben befestigt wird. Der
Beschlag ist zu diesem Zweck mit einer kegelstumpfförmigen
Einprägung versehen, die den Kopf der Senkkopfschraube aufnimmt und dessen der Schraube gegenüberliegender äußerer
Teil in dem diesen angepaßten kegelstumpfförmig erweiterten
Teil der Dübelbohrung liegt.

0027267.

75 415 G-die

18. 9. 1979

Deutsche Salice GmbH,

7141 Freiberg/Heutingheim

---

Spreizbarer Dübel

---

P a t e n t a n s p r ü c h e :

1. Spreizbarer Dübel zur Befestigung von Platten, Möbelscharnieren oder dergleichen mit einem mit einem durchgehenden Loch versehenen Schaft, der von seinem zur
Einführung in die Dübelbohrung bestimmten Ende her
mindestens über einen Teil seiner Länge mit mindestens
zwei einander gegenüberliegenden Längsschlitzen versehen ist, wobei das Loch mindestens einen Bereich aufweist, der sich in Richtung auf dieses Ende hin verbreitert, mit einem in das Loch einschiebbaren und
mit einem Innengewinde versehenen Spreizteil, in das
zum Einziehen des Spreizteils in den Bereich der sich
verengenden Bohrung eine mit einem Kopf versehene
Schraube einschraubbar ist, dadurch gekennzeichnet,
daß das Spreizteil aus einer üblichen mehrkantigen
Schraubenmutter besteht.

2. Dübel nach Anspruch 1, dadurch gekennzeichnet, daß der Schaft (1, 2, 13) zwischen dem Ende und dem sich verjüngenden Bereich (7) der Bohrung (5) einen Führungsabschnitt (6) für die Schraubenmutter aufweist, dessen Querschnittsprofil der Umfangsform der Schraubenmutter derart angepaßt ist, daß diese in diesem axial verschieblich, aber gegen Drehung gesichert, geführt ist.

3. Dübel nach Anspruch 2, dadurch gekennzeichnet, daß der sich verjüngende Bereich (7) der Bohrung (5) über einen deren Querschnitt verengenden Absatz (10) an den Führungsabschnitt (6) anschließt.

4. Dübel nach Anspruch 2, dadurch gekennzeichnet, daß der Absatz (10) aus einer Stufe mit einer radialen Anschlagfläche besteht.

5. Dübel nach einem der Ansprüche 1 bis 4, dadurch gekennzeichnet, daß der sich in Richtung auf das zur Einführung der Schraube bestimmte Ende des Loches (5) an den Führungsabschnitt (6) anschließende und sich verjüngende Bereich der Bohrung (5) eine Querschnittsform aufweist, die der des Führungsabschnitts (6) ähnlich ist, mit zunehmendem Abstand von diesem jedoch kleiner wird.

6. Dübel nach einem der Ansprüche 2 bis 5, dadurch gekennzeichnet, daß an den sich verjüngenden Abschnitt (7) eine Bohrung (8) mit gleichem Durchmesser zur Einführung der Schraube anschließt.

7. Dübel nach einem der Ansprüche 1 bis 6, dadurch gekennzeichnet, daß die Schraube mit einem Versenkkopf versehen ist und der äußere Teil der Bohrung (5) einen entsprechend kegelstumpfförmig erweiterten Teil (9) aufweist.

8. Dübel nach einem der Ansprüche 1 bis 7, dadurch gekennzeichnet, daß zwei Dübel (1, 2) durch eine Verbindungsleiste (3) an ihren oberen Rändern miteinander verbunden sind.

9. Dübel nach Anspruch 8, dadurch gekennzeichnet, daß die Leiste (3) in Bezug auf die Dübelschäfte (1, 2) flanschartig ausgebildet ist.

10. Dübel nach einem der Ansprüche 1 bis 7, dadurch gekennzeichnet, daß der Schaft (13) an seinem oberen Rand eine flanschartige Verbreiterung (14) aufweist, die auf mindestens einer Seite in radialer Richtung verlängert ist.

11. Dübel nach einem der Ansprüche 1 bis 10, dadurch gekennzeichnet, daß die Dübelschäfte (1, 2,13) auf ihren Außenseiten ein widerhakenförmiges Profil (4) aufweisen.

12. Dübel nach einem der Ansprüche 1 bis 11, dadurch gekennzeichnet, daß die Dübel aus Kunststoffspritzgußteilen bestehen.

13. Dübel nach einem der Ansprüche 1 bis 12, dadurch gekennzeichnet, daß im äußeren Randbereich des Führungsabschnitts (6) ein über dessen inneren Wandabschnitt umlaufender ringförmiger Wulst (18) vorgesehen ist.

14. Dübel nach einem der Ansprüche 1 bis 13, dadurch gekennzeichnet, daß die Dübelbohrung (5) an ihrem zur Einführung der Schraube bestimmten Ende (9) kegelstumpfförmig erweitert ist.

Fig.1  Fig.2  Fig.3 (A-B)

Fig.4 (C-D)

0027267

1/2

**Fig.5**

13

11   14

**Fig.7**

18

13

10

6

7

8

11   9

**Fig.6**

11

15

**Europäisches Patentamt**

# EUROPÄISCHER RECHERCHENBERICHT

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int.Cl.3) |
|---|---|---|---|
| | DE - C - 287 196 (MALABY)<br>* Fig. 1 *<br>-- | 1 | F 16 B 13/06 |
| | DE - U - 1 811 190 (FLAMCO)<br>* Fig. 1 *<br>-- | 1 | |
| | DE - U - 1 903 707 (BAUER)<br>* Fig. 4 *<br>-- | 1 | |
| | DE - U - 1 982 154 (LANGENSIEPEN)<br>* Fig. 1 *<br>-- | 1,3,4,<br>5 | RECHERCHIERTE SACHGEBIETE (Int. Cl.3) |
| | FR - A - 1 455 401 (GROLAIRE)<br>* Zusammenfassung *<br>-- | 1 | |
| | GB - A - 740 663 (AACKERSBERG MORTENSEN)<br>* Fig. 1 *<br>-- | 1 | F 16 B 12/00<br>F 16 B 13/00 |
| | US - A - 3 192 822 (GENTER)<br>* Fig. 3. *<br>-- | 1 | |
| | DD - A - 63 423 (ISER et al.)<br>* Spalte 4, Zeilen 4 bis 5 *<br>-- | 2,7 | KATEGORIE DER GENANNTEN DOKUMENTE |
| | GB - A - 1 403 236 (ITW)<br>* Fig. 4 *<br>-- | 3,4,6 | X: von besonderer Bedeutung<br>A: technologischer Hintergrund<br>O: nichtschriftliche Offenbarung<br>P: Zwischenliteratur |
| | CH - A - 302 654 (ABEL)<br>* Fig. 3 *<br>-- ./.. | 7,14 | T: der Erfindung zugrunde liegende Theorien oder Grundsätze<br>E: kollidierende Anmeldung<br>D: in der Anmeldung angeführtes Dokument<br>L: aus andern Gründen angeführtes Dokument |

&: Mitglied der gleichen Patentfamilie, übereinstimmendes Dokument

X Der vorliegende Recherchenbericht wurde für alle Patentansprüche erstellt.

| Recherchenort<br>Berlin | Abschlußdatum der Recherche<br>08-01-1981 | Prüfer<br>ZAPP |
|---|---|---|

EPA form 1503.1   06.78

| | Europäisches Patentamt | **EUROPÄISCHER RECHERCHENBERICHT** |

| | **EINSCHLÄGIGE DOKUMENTE** | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | | betrifft Anspruch | |
| | DE - U - 6 900 864 (CONNERTH) <br> * Fig. 3 * | | 8,9, 10 | |
| | DE - A - 1 575 336 (WESENBERG) <br> * Fig. 1 * | | 11,12 | |

RECHERCHIERTE SACHGEBIETE (Int. Cl.3)

EPA Form 1503.2   06.78